Europäisches Patentamt

European Patent Office

Office européen des brevets

(19)

(11) Numéro de publication : **0 441 710 A1**

## (12) DEMANDE DE BREVET EUROPEEN

(21) Numéro de dépôt : **91400311.6**

(22) Date de dépôt : **08.02.91**

(51) Int. Cl.⁵ : **G05D 23/19, F28F 27/00**

(30) Priorité : **09.02.90 FR 9001552**

(43) Date de publication de la demande :
**14.08.91 Bulletin 91/33**

(84) Etats contractants désignés :
**BE CH DE ES FR GB IT LI NL SE**

(71) Demandeur : **VULCANIC**
**Zone Industrielle des Chanoux 48, rue Louis Ampère**
**F-93330 Neuilly-sur-Marne (FR)**

(72) Inventeur : **Duperry, Gérard**
**10, Parc de Miraville**
**F-95200 Sarcelles (FR)**

(74) Mandataire : **Leszczynski, André et al**
**CABINET NONY & CIE. 29 rue Cambacérès**
**F-75008 Paris (FR)**

(54) **Dispositif de maintien et de regulation en temperature.**

(57)     Le dispositif de maintien et de régulation en température d'un appareil, au moyen d'une circulation forcée de fluide caloporteur, comporte une canalisation reliant entre eux : une pompe de circulation, des organes de branchement de l'appareil, et un ensemble réchauffeur-refroidisseur 4 dudit fluide caloporteur. L'ensemble réchauffeur-refroidisseur 4 comporte un élément de chauffage 17 et un échangeur-refroidisseur par passage d'un liquide froid.
    Le réchauffeur-refroidisseur 4 comporte des moyens 18 pour amener le fluide caloporteur en un point A de ladite circulation forcée à une valeur de pression déterminée.
    Application notamment aux outillages de moulage de matières plastiques, réacteurs ou cuves.

EP 0 441 710 A1

FIG.1

# DISPOSITIF DE MAINTIEN ET DE REGULATION EN TEMPERATURE

La présente invention a pour objet un dispositif de maintien et de régulation en température d'un appareil industriel.

L'invention vise plus particulièrement le maintien et la régulation en température d'un outillage de moulage plastique, d'un réacteur siège d'un processus chimique, ou d'une cuve de stockage.

On connaît suivant FR-A- 2.146.049, un dispositif de maintien à température constante, à circuit ouvert, comportant un réservoir de liquide de transfert de chaleur partagé en deux compartiments. Un premier compartiment comporte une pompe de circulation et un dispositif chauffant relié aux ouvertures d'entrée et de sortie d'un circuit de liquide de transfert de chaleur. Un autre compartiment en liaison avec l'atmosphère ambiante présente un dispositif de refroidissement. Les deux compartiments sont reliés par au moins un organe de liaison, permettant le passage du liquide du transfert de chaleur. Cet organe empêche, dans une large mesure, le mélange des fractions du liquide de transfert de chaleur dans les compartiments.

Ce type de dispositif à circuit ouvert évite, aux températures élevées, un dégagement de vapeur et de nébulisations gênantes. Cependant, il ne permet de fonctionner qu'à la pression atmosphérique, de sorte qu'il est impossible d'utiliser de l'eau comme fluide de transfert de chaleur pour des températures supérieures à 120 degrés.

On connaît par ailleurs un dispositif pour maintenir à température constante des moules, ou des machines de transformation de matières plastiques, utilisant de l'eau comme fluide caloporteur dans des domaines de température compris entre 10 et 140 degrés. Ces dispositifs fonctionnent sous pression, nécessitent au moins une soupape de sécurité par circuit de fluide ou par moyen de mise sous pression et comprennent au moins deux et généralement trois soupapes de sécurité, qui sont des organes coûteux.

Ces dispositifs de maintien en température sont munis d'un réservoir de fluide caloporteur. Lorsque le réservoir est de grande capacité, il procure une "inertie thermique" élevée, facilitant le maintien en température et la régulation. Lorsque le réservoir est de faible capacité, l'"inertie thermique" est faible et l'adaptation en température est rapide mais la régulation devient plus difficile à assurer.

Le but de l'invention est de remédier aux inconvénients précités, en créant un dispositif de maintien et de régulation en température, au moyen d'une circulation forcée de fluide caloporteur, permettant notamment de :
- supprimer les dispositifs de protection coûteux de l'art antérieur,
- minimiser le volume de fluide caloporteur en circulation

- réduire la taille et le coût de l'installation.

Dans ce but, le dispositif selon l'invention pour maintenir et réguler en température un appareil tel que notamment un outillage de moulage de matières plastiques, un réacteur ou une cuve au moyen d'une circulation forcée de fluide caloporteur, comporte une canalisation reliant entre eux une pompe de circulation, des organes de branchement d'un appareil à maintenir et réguler en température, un ensemble réchauffeur-refroidisseur dudit fluide caloporteur, ledit ensemble réchauffeur-refroidisseur comportant un élément de chauffage et un échangeur-refroidisseur par passage d'un liquide froid, des capteurs de température et un moyen de régulation de température et de commande de réchauffement-refroidissement et se caractérise en ce que le réchauffeur-refroidisseur comporte des moyens pour amener le fluide caloporteur en un point de ladite circulation forcée à une valeur de pression déterminée, de préférence sensiblement égale à la pression dudit liquide froid.

En fixant ainsi en un point de la circulation forcée la pression du fluide caloporteur, le risque de surpression est écarté et on peut se passer des soupapes de sécurité coûteuses de l'art antérieur, tout en fonctionnant sous pression.

Selon l'invention, lesdits moyens pour amener ledit fluide caloporteur à une valeur de pression déterminée en un point de ladite circulation forcée, sont avantageusement conformés pour mettre en communication ledit fluide caloporteur et ledit liquide froid.

Ceci permet d'utiliser le même fluide comme fluide caloporteur et comme liquide froid et d'effectuer le remplissage du circuit de fluide caloporteur directement par l'alimentation en liquide froid.

Le réchauffeur-refroidisseur du dispositif selon l'invention comporte de préférence une enveloppe munie d'un purgeur d'air automatique, ladite enveloppe contenant au moins une résistance électrique de chauffage fixée contre la paroi interne de ladite enveloppe et un échangeur-refroidisseur disposé sensiblement en partie centrale à l'intérieur de ladite enveloppe.

Ainsi les parties froides du réchauffeur-refroidisseur sont disposées sensiblement en partie centrale et les parties chaudes sont disposées vers l'enveloppe ; cette disposition ne produit pas de contrainte mécanique dûe aux dilatations thermiques lors des variations de températures.

De façon avantageuse, l'élément de chauffage est en situation d'échange thermique avec l'enveloppe vers la partie de l'enveloppe destinée à être située à l'altitude la plus élevée, un thermostat de sécurité étant appliqué extérieurement à l'enveloppe, sensiblement au niveau et en face de ladite partie, du côté extérieur de l'enveloppe.

Le refroidisseur est de préférence sensiblement en forme de chemise, constituée par deux éléments sensiblement cylindriques et concentriques, fermés à une extrémité par au moins un fond et à l'autre par une rondelle annulaire, de manière à refroidir le fluide caloporteur arrivant à l'intérieur de la chemise du côté du fond, pour se diriger ensuite de l'extrémité située du côté du fond vers l'extrémité fermée par la rondelle annulaire, contourner ladite extrémité et circuler en partie extérieure de ladite chemise.

Ladite chemise remplie par le liquide froid comporte, de façon avantageuse, pour sa mise en communication avec l'intérieur de l'enveloppe rempli par le fluide caloporteur, un orifice calibré, ledit orifice calibré pouvant être obturé par un pointeau ou analogue.

L'élément de chauffage comprend de préférence une ou plusieurs résistances électriques à tubes blindés, conformées en épingle de forme arrondie, s'inscrivant à l'intérieur de l'enveloppe.

La chemise est munie intérieurement entre les deux cylindres sensiblement concentriques d'une garniture hélicoïdale.

La chemise comporte sur sa partie intérieure des bossages ou des conformations pour centrer la chemise sur une partie évasée prolongeant un tuyau d'arrivée du fluide caloporteur.

Ainsi, si l'on utilise un fluide caloporteur dont la courbe de pression en fonction de la température est croissante, le thermostat de sécurité protège à la fois l'élément de chauffage contre les surchauffes et le dispositif tout entier contre les surpressions.

Le liquide froid du refroidisseur et le fluide caloporteur sont à une pression sensiblement égale et ne soumettent donc pas la chemise du refroidisseur à des pressions différentielles susceptibles de déformer cette chemise. L'orifice calibré mettant en communication le liquide froid de la chemise et le fluide caloporteur de l'enveloppe permet d'alimenter automatiquement en liquide le circuit de fluide caloporteur et de compenser les dilatations volumiques dûes à des variations de température. La résistance électrique à tube blindé conformée en épingle de forme arrondie s'inscrit à l'intérieur de l'enveloppe et permet une construction compacte du réchauffeur-refroidisseur. La garniture hélicoïdale intérieure de la chemise crée un circuit d'écoulement du liquide froid en évitant des poches ou des stagnations de liquide à des températures différentes. Le centrage de la chemise sur la partie évasée au moyen de bossages ou de conformations définit un écartement uniforme et une section de passage constante pour le fluide caloporteur, d'où des vitesses de circulation de fluide caloporteur et des conditions de transfert thermique uniformes.

De préférence, au moins un capteur de température est fixé sur la canalisation de fluide caloporteur et au moins un autre capteur de température est fixé sur l'appareil à maintenir et réguler en température.

On choisit ainsi le capteur fixé sur la canalisation de fluide caloporteur lors de variations rapides de température alors que, lors du maintien en température de l'appareil, on choisit le capteur fixé sur l'appareil si celui-ci présente une "masse thermique" notable.

De préférence également, l'échangeur-refroidisseur est relié d'une part à une alimentation sous pression de liquide froid et, d'autre part à une évacuation de liquide froid, par une vanne d'évacuation de manière à faire circuler le liquide froid et le renouveler sur commande dudit moyen de régulation et de commande.

Ainsi, on peut affiner le maintien et la régulation de température en modulant le renouvellement du liquide froid dans la chemise : cette chemise cumule alors les rôles de réservoir - ayant pour fonction d'amortir les variations de températures - et d'échangeur - ayant pour rôle d'accélérer les variations de températures.

L'invention sera mieux comprise grâce à la description qui va suivre d'un mode de réalisation donné à titre d'exemple non limitatif au regard des dessins annexés sur lesquels :

– la figure 1 représente un schéma de circuit hydraulique comprenant un dispositif selon l'invention,

– la figure 2 représente un diagramme d'évolution de pression le long du circuit hydraulique de la figure 1,

– la figure 3 représente une vue schématique en coupe longitudinale d'un réchauffeur-refroidisseur d'un dispositif selon l'invention,

– les figures 4 et 5 représentent un élément de chauffage d'un réchauffeur-refroidisseur selon l'invention.

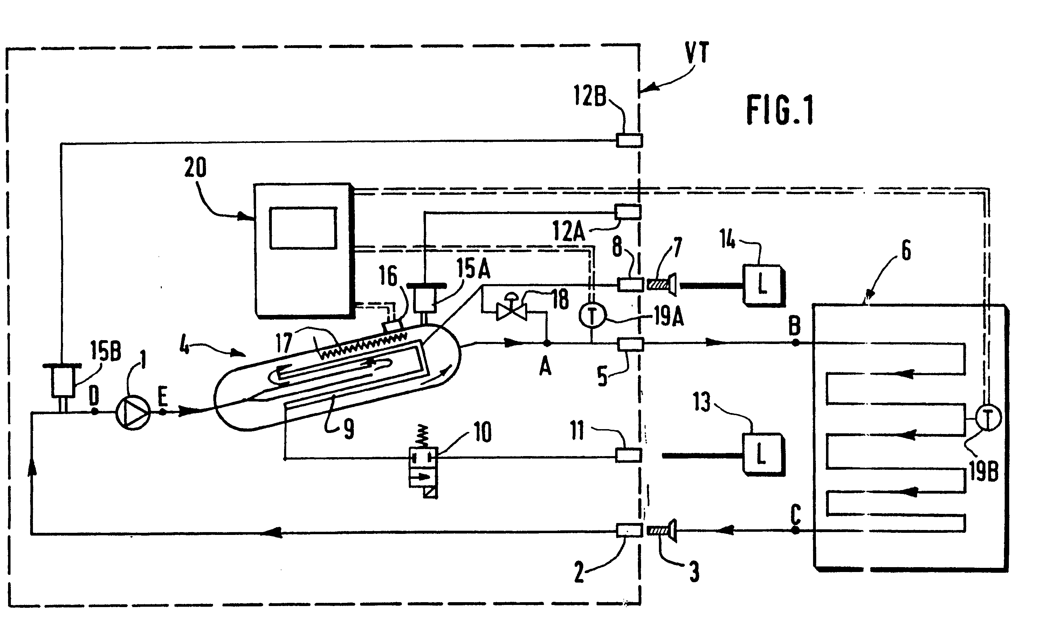

En référence à la figure 1, un dispositif VT selon l'invention (limité par les traits interrompus) est raccordé à un appareil à maintenir en température, par exemple un moule 6, par un raccord 5, de préférence auto-obturant. Le fluide caloporteur traverse le moule et revient au dispositif à travers un filtre 3 et un raccord auto-obturant 2 et arrive à l'aspiration d'une pompe 1 qui impose le sens de la circulation forcée de fluide caloporteur. La pompe 1 refoule le fluide caloporteur à travers le réchauffeur-refroidisseur 4, puis à travers le raccord 5 précité de départ vers le moule 6.

Un capteur 19A de température interne au dispositif est fixé sur la canalisation de fluide caloporteur, tandis qu'un capteur 19B de température est fixé sur le moule 6. Ces capteurs transmettent à tour de rôle une information de température vers un moyen de régulation et de commande 20, qui est un régulateur de type connu comportant des relais électriques de commande de fonctionnement d'une électro-vanne ou d'une résistance de chauffage.

Un circuit de liquide froid provenant d'une alimentation 14 en liquide froid à une pression supérieure à 1,5 bar (pression absolue) et généralement comprise entre 3 et 6 bar, passe à travers un filtre 7 et un raccord 8, de préférence auto-obturant pour alimenter un échangeur-refroidisseur contenu à l'intérieur du réchauffeur-refroidisseur 4. En sortie de l'échangeur-refroidisseur, le débit de liquide froid est commandé par une vanne 10 télécommandée par le régulateur 20, de préférence une électro-vanne. Un raccord 11, de préférence auto-obturant, permet de raccorder la sortie du liquide froid à une évacuation 13 ou à un circuit de réfrigération. Des purgeurs 15A et 15B permettent d'evacuer l'air du circuit de fluide caloporteur.

Les purges d'air sortant des purgeurs 15A et 15B sont évacuées par des tubes flexibles jusqu'aux points d'évacuation à l'atmosphère 12A, 12B.

Des moyens 18 du réchauffeur-refroidisseur amènent le fluide caloporteur en un point A de la circulation forcée à une valeur de pression déterminée, de préférence sensiblement égale à la pression $p_L$ du liquide froid. Les moyens 18 sont par exemple un robinet de communication entre le circuit de liquide froid et le circuit de fluide caloporteur.

Le long du circuit hydraulique, on voit successivement le point A en sortie du réchauffeur-refroidisseur, le point B à l'entrée du moule 6, le point C en sortie du moule 6, le point D à l'aspiration de la pompe 1, le point E au refoulement de la pompe 1.

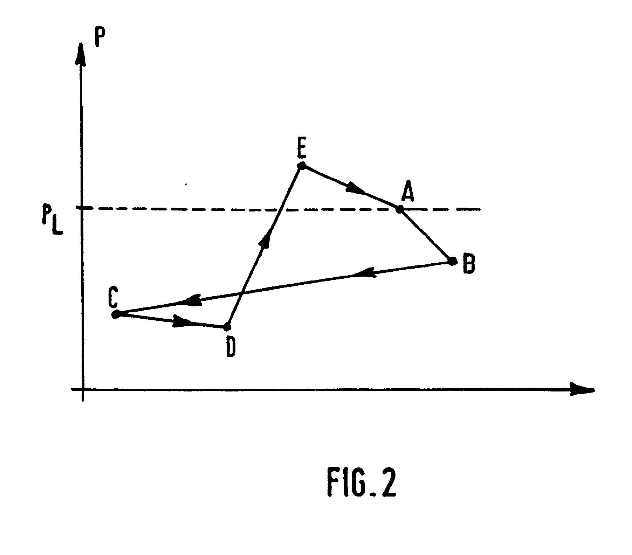

En référence à la figure 2, le point A correspond à une pression de fluide caloporteur, sensiblement égale à la pression $p_L$ du liquide froid, intermédiaire entre la pression de refoulement de la pompe en E et la pression à la sortie C du moule 6. Les pressions à l'entrée B du moule et à l'aspiration D de la pompe sont respectivement supérieure et inférieure à la pression en sortie C du moule 6. En fixant la pression au point A, on assure ainsi un fonctionnement stable de la circulation forcée de fluide caloporteur sans surpression ni baisse de pression excessives ; aucune soupape de sécurité n'est donc nécessaire et on dimensionne de préférence la pompe 1 pour fournir une pression différentielle entre les points D et E comprise entre 1 et 6 bar à un débit nominal compris entre 0,5 et 5 m³/h.

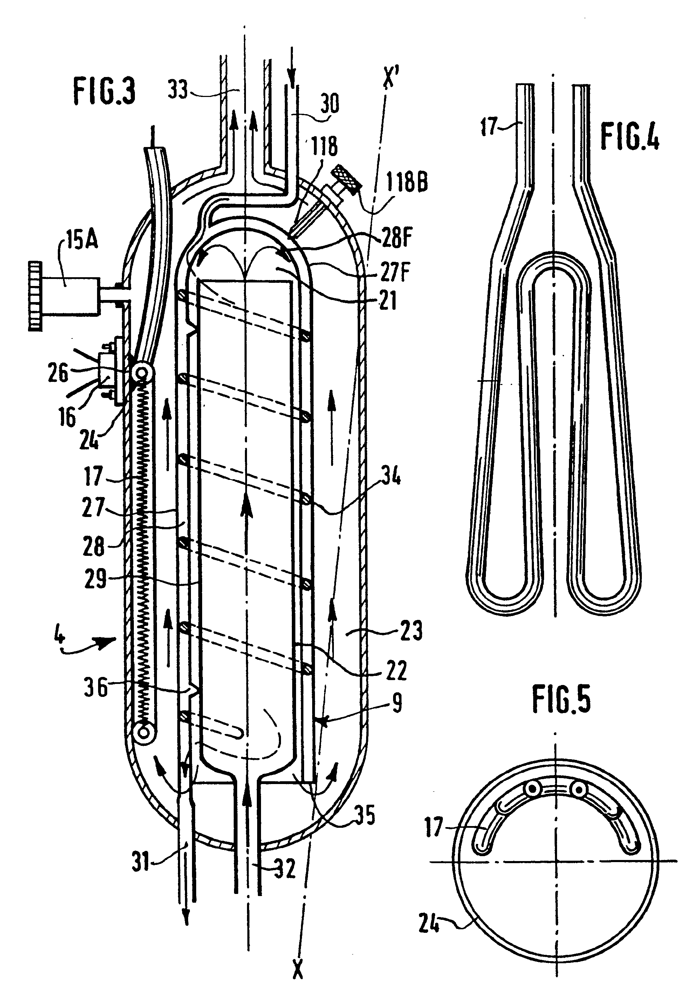

En référence aux figures 1 et 3, un réchauffeur-refroidisseur d'un dispositif selon l'invention comporte une enveloppe étanche 24 munie d'un purgeur d'air 15A automatique. On installe le réchauffeur-refroidisseur de manière à ce que le purgeur d'air 15A soit localisé en partie haute de l'enveloppe 24 pour évacuer les poches d'air. La droite X-X' est l'intersection du plan de coupe et d'un plan horizontal correspondant à l'installation du réchauffeur-refroidisseur.

L'enveloppe 24 contient au moins une résistance électrique 17 de chauffage fixée contre la paroi interne de l'enveloppe 24 et protégée par un thermostat de sécurité 16 et un échangeur-refroidisseur disposé sensiblement en partie centrale à l'intérieur de l'enveloppe 24. La résistance 17 électrique de chauffage est en situation d'échange thermique avec l'enveloppe 24 en y étant reliée par une brasure 26. Le thermostat 16 de sécurité est appliqué extérieurement à l'enveloppe 24 sensiblement au niveau et en face de ladite partie du côté extérieur de l'enveloppe 24. Un échauffement excessif, notamment au niveau de la brasure 26, est immédiatement capté par le thermostat 16 de sécurité relié au moyen 20 de régulation de température et de commande.

On utilise de préférence comme élément chauffant une résistance électrique de chauffage, en tube blindé à gaine métallique, par exemple en cuivre. Cette résistance est formée, comme représenté à la figure 4, suivant une épingle double. Cette épingle double est ensuite mise en forme arrondie, de façon à s'inscrire à l'intérieur de l'enveloppe 24 en étant comprise dans un espace limité par deux cylindres sensiblement concentriques d'axe commun avec l'axe de symétrie longitudinal de l'enveloppe, le premier cylindre étant la paroi longitudinale intérieure de l'enveloppe 24, le deuxième cylindre contenant l'échangeur-refroidisseur que l'on va décrire ci-après.

L'échangeur-refroidisseur est sensiblement en forme de chemise 9, constituée par deux éléments 27, 28 sensiblement cylindriques et concentriques fermés à une extrémité par au moins un fond, par exemple des fonds bombés 27F, 28F et à l'autre extrémité par une rondelle annulaire 35, de manière à refroidir le fluide caloporteur.

Le fluide caloporteur arrive par une tubulure d'entrée 32 traversant et soudée sur un fond de l'enveloppe 24 qui se prolonge par une partie évasée 29, sensiblement cylindrique et débouche dans un espace 21 à l'intérieur de la chemise située du côté du fond 28F pour se diriger ensuite de l'extrémité située du côté du fond 28F à travers l'espace annulaire 22 vers l'extrémité fermée par la rondelle annulaire 35, contourner cette extrémité, circuler dans l'espace 23 situé en partie extérieure de la chemise et sortir du réchauffeur-refroidisseur 4 par la tubulure de sortie 33.

La chemise 9 remplie par le liquide froid est en communication avec l'intérieur de l'enveloppe 24 rempli par le fluide caloporteur au moyen d'un orifice calibré 118, pouvant être obturé par un pointeau 118B ou analogue. La chemise 9 est munie intérieurement entre les deux cylindres 27, 28 sensiblement concentriques, d'une garniture hélicoïdale 34. Un tube 30 d'entrée de liquide froid conformé de manière à permettre une certaine liberté de dilatation comporte par exemple deux coudes.

Le liquide froid arrivant par le tube 30 traversant et soudé sur l'enveloppe 24 circule dans l'intervalle annulaire réduit entre les cylindres 27 et 28 suivant un parcours imposé par la garniture hélicoïdale 34. Le liquide froid effectue ce parcours hélicoïdal à grande vitesse en assurant ainsi un transfert thermique efficace. Le liquide froid en sortie de l'espace annulaire compris entre les cylindres 27 et 28 passe dans une tubulure de sortie d'eau 31 soudée sur la rondelle annulaire 35 et traversant l'enveloppe 24 pour aller vers l'évacuation commandée par l'électro-vanne d'évacuation 10 représentée à la figure 1. L'échangeur-refroidisseur est réalisé en cuivre ou matériau bon conducteur de la chaleur de faible épaisseur. A l'exception du moyen 118 de communication avec le circuit de fluide caloporteur, tous les raccordements du circuit de liquide froid à l'enveloppe 24 ou à l'extérieur sont étanches vis-à-vis de l'atmosphère et du fluide caloporteur.

L'espacement entre la partie évasée 29 et le cylindre 28 est déterminé de façon à ce que ledit fluide passe dans l'espace annulaire 22 à une vitesse élevée comprise entre 3 et 15 mètres par seconde, de préférence sensiblement égale à 5 mètres par seconde. L'espacement entre l'enveloppe 24 et le cylindre 27 est déterminé de façon à ce que la vitesse du fluide caloporteur soit comprise entre 1 et 10 mètres par seconde, de préférence voisine de 4 mètres par seconde. Ceci permet une grande efficacité de transfert thermique et l'utilisation d'éléments chauffants de puissance spécifique élevée, supérieure à 10 watts par cm².

Des bossages 36 ou conformations réalisées sur la partie intérieure de la chemise, par exemple par déformation du cylindre intérieur 28 centrent la chemise sur la partie évasée 29 prolongeant la tubulure d'arrivée 32 et assurent un espacement constant des cylindres 28 et 29 et ainsi des conditions de circulation constantes du fluide caloporteur dans l'espace annulaire 22.

Le fonctionnenent du dispositif est le suivant, en référence à la figure 1 :

- le régulateur électronique 20 reçoit une information d'un capteur de température 19A fixé sur la canalisation de fluide caloporteur ou d'un autre capteur de température 19B fixé sur l'appareil 6. Le régulateur de température commande, par l'intermédiaire d'un relais, la mise sous tension des résistances de chauffage 17, ce qui produit le réchauffement du circuit. Lorsque les conditions souhaitées de température sont dépassées, le régulateur arrête le chauffage et ouvre l'électro-vanne 10 d'évacuation de liquide froid pendant un intervalle de temps supérieur à 100 millisecondes. L'échangeur-refroidisseur remplit, lorsque l'électro-vanne 10 est fermée, un rôle de "réservoir tampon" pour amortir les variations de température autour de la température de maintien et sa fonction normale de refroidisseur à double passe lorsque ladite électro-vanne 10 est ouverte.

L'invention permet ainsi de créer un dispositif pour maintenir et réguler en température un appareil avec une précision meilleure que 1°C, dans une plage de températures variant entre 5°C et 400°C. Le volume de fluide caloporteur contenu dans un dispositif décrit ci-dessus est inférieur à 5 litres et les performances sont identiques ou meilleures que celles de dispositifs de l'art antérieur utilisant des volumes 5 à 10 fois plus importants.

La disposition adoptée permet d'amortir les variations de température et d'effectuer des variations de températures rapides, compte tenu de la faible contenance de la chemise de l'échangeur-refroidisseur.

Un dispositif selon l'invention permet d'utiliser un même fluide comme fluide caloporteur et comme liquide froid. On utilise de préférence entre la température ambiante et environ 150°C de l'eau adoucie et, au-dessus de 150°C, les fluides haute température du commerce, tels que des huiles silicones ou analogues.

Les mesures effectuées sur un dispositif suivant l'invention ont montré de façon surprenante qu'aux températures comprises entre 60 et 120 degrés, la puissance de refroidissement du dispositif était plus importante que la puissance de chauffe, sensiblement trois fois plus élevée.

Cette propriété illustre les avantages inattendus du dispositif selon l'invention particulièrement apte à maintenir efficacement à une température donnée les appareils industriels où se déroulent des processus exothermiques ou des réchauffements naturels, tels que les machines de transformation de matières plastiques, les réacteurs chimiques ou certaines cuves de stockage. Bien entendu, de nombreuses modifications peuvent être envisagées en variante du mode de réalisation décrit ci-dessus sans sortir du cadre de la présente invention.

Ainsi, les moyens pour amener le fluide caloporteur en un point de la circulation forcée à une valeur de pression sensiblement égale à la pression du liquide froid, peuvent consister en un soufflet ou un moyen d'équilibrage de pression ne faisant pas communiquer le fluide caloporteur avec le liquide froid. On peut utiliser un nombre quelconque de résistances électriques de chauffage, de formes géométriques différentes. On peut utiliser un système sélectif et enfichable pour sélectionner, soit le capteur de température de la canalisation de fluide caloporteur, soit le capteur de température de l'appareil à maintenir ou réguler en température. En effet, dès que la température de maintien souhaitée est à peu près atteinte, il est préférable d'utiliser la température de l'appareil fournie par un thermocouple 19B. A cet effet, on peut utiliser une prise Jack spéciale. Cette prise, en l'absence de connecteur mâle enfiché, assure la connexion du capteur de température 19A interne au dispositif. Lorqu'un connecteur mâle est enfiché dans la prise Jack, l'action mécanique du connecteur mâle interrompt le circuit du capteur 19A de température et assure la connexion du capteur de température 19B. Ceci permet de fournir au régulateur 20 une seule information de température à la fois, en évitant l'utilisation d'une porte logique qui serait sans cela nécessaire pour choisir l'information adéquate à transmettre au régulateur.

## Revendications

1. Dispositif pour maintenir et réguler en température un appareil (6) tel que notamment un outillage de moulage de matières plastiques, un réacteur ou une cuve, au moyen d'une circulation forcée de fluide caloporteur, ledit dispositif comportant une canalisation reliant entre eux :
   – une pompe de circulation (1),
   – des organes de branchement (2,5) de l'appareil à maintenir et réguler en température,
   – et un ensemble réchauffeur-refroidisseur (4) dudit fluide caloporteur, ledit ensemble réchauffeur-refroidisseur (4) comportant un élément de chauffage (17) et un échangeur-refroidisseur par passage d'un liquide froid,
   – des capteurs (19A,19B) de température et un moyen (20) de régulation de température et de commande de réchauffement-refroidissement, caractérisé en ce que le réchauffeur-refroidisseur (4) comporte des moyens (18,118) pour amener le fluide caloporteur en un point (A) de ladite circulation forcée, à une valeur de pression déterminée, de préférence sensiblement égale à la pression ($p_L$) dudit liquide froid.

2. Dispositif de régulation et de maintien de température selon la revendication 1, caractérisé par le fait que lesdits moyens (18,118) pour amener ledit fluide caloporteur à une valeur de pression déterminée en un point de ladite circulation forcée sont conformés pour mettre en communication ledit fluide caloporteur et ledit liquide froid.

3. Dispositif selon la revendication 1, caractérisé en ce que le réchauffeur-refroidisseur comporte une enveloppe (24) munie d'un purgeur d'air automatique (15A), ladite enveloppe (24) contenant au moins une résistance électrique de chauffage (17) fixée contre la paroi interne de ladite enveloppe (24), et un échangeur-refroidisseur disposé sensiblement en partie centrale à l'intérieur de ladite enveloppe (24).

4. Dispositif selon l'une quelconque des revendications 1, 2 ou 3, caractérisé en ce que l'élément de chauffage (17) est en situation d'échange thermique avec l'enveloppe (24) vers la partie de l'enveloppe destinée à être située à l'altitude la plus élevée, un thermostat (16) étant appliqué extérieurement à l'enveloppe sensiblement au niveau et en face de ladite partie, du côté extérieur de l'enveloppe (24).

5. Dispositif selon l'une des revendications 1 à 4, caractérisé en ce que le refroidisseur est sensiblement en forme de chemise (9) constituée par deux éléments (27,28) sensiblement cylindriques et concentriques fermés à une extrémité par au moins un fond (27F,28F) et à l'autre par une rondelle (35) annulaire de manière à refroidir le fluide caloporteur arrivant à l'intérieur (21) de la chemise (9) du côté du fond (27F,28F), pour se diriger ensuite de l'extrémité située du côté du fond vers l'extrémité fermée par la rondelle (35) annulaire, contourner cette extrémité et circuler en partie extérieure (23) de ladite chemise (9).

6. Dispositif selon la revendication 5, caractérisé en ce que ladite chemise (9) remplie par le liquide froid comporte, pour sa mise en communication avec l'intérieur de l'enveloppe (24) rempli par le fluide caloporteur, un orifice (118) calibré, ledit orifice (118) calibré pouvant être obturé par un pointeau (118B) ou analogue.

7. Dispositif selon l'une des revendications 1 à 6, caractérisé en ce que l'élément de chauffage comporte au moins une résistance électrique (17) à tube blindé conformée en épingle de forme arrondie s'inscrivant à l'intérieur de l'enveloppe (24).

8. Dispositif selon la revendication 5 et l'une quelconque des revendications 1 à 7, caractérisé en ce que ladite chemise (9) est munie intérieurement entre les deux cylindres (27,28) sensiblement concentriques d'une garniture hélicoïdale (34).

9. Dispositif selon la revendication 5 et l'une quelconque des revendications 1 à 8, caractérisé en ce que ladite chemise (9) comporte sur sa partie intérieure des bossages (36) ou des conformations pour centrer la chemise sur une partie évasée (29) prolongeant un tuyau (32) d'arrivée du fluide caloporteur.

10. Dispositif selon l'une des revendications 1 à 9, caractérisé en ce que au moins un capteur de température est fixé sur la canalisation de fluide caloporteur, ledit capteur pouvant être interne (19A) au dispositif ou externe (19B) au dispositif.

11. Dispositif selon l'une des revendications 1 à 10, caractérisé en ce que l'échangeur-refroidisseur est relié d'une part à une alimentation (14) sous pression de liquide froid et d'autre part à une évacuation (13) de liquide froid par une vanne d'évacuation (10) de manière à faire circuler le liquide froid et le renouveler sur commande dudit moyen (20) de régulation et de commande.

FIG.1

EP 0 441 710 A1

FIG. 2

FIG.3

FIG.4

FIG.5

Office européen
des brevets

**RAPPORT DE RECHERCHE EUROPEENNE**

Numero de la demande

EP    91 40 0311

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,Y | FR-A-2146049 (B. VOLLMERT) <br> * page 5, ligne 33 - page 6, ligne 7 * <br> * page 7, lignes 15 - 18 * <br> * page 10, lignes 20 - 35 * <br> * page 12, lignes 27 - 34; figures 1, 5 * | 1 | G05D23/19 <br> F28F27/00 |
| A | | 10 | |
| Y | GB-A-1118885 (J. H. ANDERSON) <br> * page 1, lignes 59 - 89 * <br> * page 4, lignes 27 - 60; figure 1 * | 1 | |
| A | | 2 | |
| A | US-A-3493037 (P. HAAKE) | 1 | |
| A | EP-A-0245827 (BRG MECHATRONIKAI VALLALAT) | 1 | |
| A | GB-A-891683 (ORENDA ENGINES LTD) <br> * page 1, lignes 15 - 19 * | 1, 2 | |
| A | DE-U-8812140 (I.E.C.I. DI FRAT. INVERARDI PIERLUIGI E MAURO S.N.C.) <br> * page 6, lignes 13 - 26; figure 2 * | 3 | |

**DOMAINES TECHNIQUES RECHERCHES (Int. Cl.5 )**

G05D
F24H
F28F
F28D

Le présent rapport a été établi pour toutes les revendications

| Lieu de la recherche | Date d'achèvement de la recherche | Examinateur |
|---|---|---|
| LA HAYE | 13 MAI 1991 | HELOT H.V. |

EPO FORM 1503 03.82 (P0402)